(19) Europäisches Patentamt
European Patent Office
Office européen des brevets

(11) **EP 3 011 067 B1**

(12) **FASCICULE DE BREVET EUROPEEN**

(45) Date de publication et mention
de la délivrance du brevet:
**24.10.2018 Bulletin 2018/43**

(21) Numéro de dépôt: **14777145.5**

(22) Date de dépôt: **13.06.2014**

(51) Int Cl.:
*C22C 21/06* (2006.01)     *B44C 3/00* (2006.01)
*C22F 1/047* (2006.01)     *C23C 22/00* (2006.01)

(86) Numéro de dépôt international:
**PCT/IB2014/001583**

(87) Numéro de publication internationale:
**WO 2014/203077 (24.12.2014 Gazette 2014/52)**

(54) **JONC ENJOLIVEUR DE VÉHICULE AUTOMOBILE EN ALLIAGE ALUMINIUM-MAGNÉSIUM.**

PROFILRING FÜR KRAFTFAHRZEUG AUS ALUMINIUM/MAGNESIUMLEGIERUNG

MOTOR VEHICLE MOULDING RING MADE FROM ALUMINIUM/MAGNESIUM ALLOY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.06.2013 FR 1301401**

(43) Date de publication de la demande:
**27.04.2016 Bulletin 2016/17**

(73) Titulaire: **Constellium Rolled Products Singen
GmbH & Co.KG**
**78224 Singen (DE)**

(72) Inventeurs:
• **KULAS, Mary-Anne**
**F-38340 Voreppe (FR)**

• **AFSETH, Andreas**
**F-38500 Coublevie (FR)**
• **GILLICH, Volkmar**
**CH-8212 Neuhausen (CH)**

(74) Mandataire: **Constellium - Propriété Industrielle
C-TEC Constellium Technology Center
Propriété Industrielle
Parc Economique Centr'Alp
725, rue Aristide Bergès
CS10027
38341 Voreppe (FR)**

(56) Documents cités:
**EP-A1- 0 507 411     DE-A1-102007 057 777
US-A- 5 714 019**

**Description**

**Domaine de l'invention**

L'invention concerne le domaine des baguettes ou joncs enjoliveurs de véhicule automobile en alliage d'aluminium pour utilisation essentiellement en extérieur de carrosserie, tels que notamment les entourages de vitres, baguettes latérales de caisse ou portières, baguettes enjoliveurs de hayon, enjoliveurs de calandre et joncs de pare-choc. L'invention concerne plus particulièrement des tôles en alliage d'aluminium de la série AA5xxx de composition et traitement thermique particulièrement adaptés à ce type d'application et présentant après mise en forme et brillantage une excellente résistance à la corrosion en particulier par les solutions de plus en plus alcalines que constituent les produits détergents de lavage notamment des laveries automatiques.

**Etat de la technique**

Les alliages d'aluminium sont couramment utilisés dans la fabrication de pièces décoratives brillantes pour l'industrie automobile, en concurrence avec l'acier et les matières plastiques.

Tel est le cas en particulier des baguettes ou joncs enjoliveurs d'extérieur de carrosserie, tels que les entourages de vitres, baguettes latérales de caisse ou portières, baguettes enjoliveurs de hayon, enjoliveurs de calandre et joncs de pare-choc.

Tous les alliages d'aluminium dont il est question dans ce qui suit sont désignés, sauf mention contraire, selon les désignations définies par l' « Aluminum Association » dans les « Registration Record Series » qu'elle publie régulièrement.

Deux types de produits se partagent aujourd'hui le marché : les profilés extrudés et les tôles mises en forme, avant le traitement d'anodisation/brillantage.

Pour les premiers sont essentiellement utilisés des alliages dits de haute pureté de la série AA6xxx, et en particulier du type AA6401. Pour les seconds, en Amérique du Nord, prédominent les alliages des types AA3xxx et 8xxx, alors qu'en Europe sont plutôt utilisés les alliages de haute pureté de la série AA5xxx.

Toutefois, les tôles élaborées à partir de ces derniers sont jugées par les constructeurs automobiles moins performantes que les produits élaborés à partir de profilés de la série AA6xxx, notamment en termes de tenue à la corrosion en milieu fortement alcalin.

En effet, parmi les principaux paramètres du cahier des charges de ce type de tôle brillante, figurent une certaine résistance mécanique, une bonne formabilité et, surtout, une bonne aptitude au brillantage et à l'anodisation et le maintien sans détérioration de l'aspect ainsi obtenu tout au long de la vie du véhicule.

Ce dernier paramètre est devenu particulièrement contraignant avec l'évolution récente des produits détergents des laveries automatiques vers des solutions de plus en plus alcalines, soit au-delà du pH de stabilité de la couche anodique finale, pouvant induire à terme une perte de brillance rédhibitoire.

Des tests de qualification ont été développés de ce fait par les constructeurs automobiles pour différencier les différents produits (alliages, mode de transformation, traitement de surface).

Le plus répandu, connu sous le nom de « car wash test » consiste à immerger partiellement un échantillon du produit final dans une solution très alcaline, soit à un pH de 11 à 14, pendant 10 minutes, puis à déterminer visuellement la perte ou non de brillance après nettoyage des produits d'attaque.

La procédure expérimentale précise est décrite par la suite au chapitre « Objet de l'invention ». La solution alcaline aqueuse la plus récemment utilisée est constituée de 12.5 g/l de NaOH, 4.64 g/l de $Na_3PO_4$-12 $H_2O$ et 0.33 g/l de NaCl. Son pH mesuré lors des essais rapportés au chapitre « Exemples » était de 13.5.

On peut, en complément, et pour quantifier les résultats, mesurer la perte de poids des échantillons au cours de l'opération.

Les principaux travaux sur ce sujet se sont essentiellement concentrés sur les conditions des traitements de surface de brillantage et surtout d'anodisation finale en vue d'augmenter la résistance de la couche anodique à ces solutions très agressives. Tel est le cas notamment de l'étude de L. E. Cohen et J. A. Hook rapportée dans « Corrosion of anodized aluminium by alkaline cleaners: Causes and cures », Plat. Surf. Finish, 74(2), 1987, p.73-76.

L'efficacité de l'addition de silicate ou de sels de métal de transition pendant l'étape de colmatage a été démontrée en particulier par S. Jolivet dans « Colmatage résistant aux milieux alcalins », Colloque sur le Traitement de Surface des Alliages d'Aluminium, CETIM/CERTEC, 2008. Elle a également fait l'objet de la demande EP 1873278 A1 « Silicate treatment of sealed anodised aluminium » déposée en 2006 par Henkel KGAA.

D'autres travaux ont par ailleurs porté sur l'influence de la géométrie de la couche d'oxyde, comme notamment ceux de R. Steins et al. rapportés dans « High performance anodized layers », European Aluminium Congress, 2009.

Enfin, les solutions les plus récentes portent sur l'application d'une couche de sol-gel à base de silane sur la couche anodique, ce qui augmente grandement la résistance du produit final. Elles ont notamment fait l'objet de la demande WO 2009/068168 « Component made of A1 alloy having very high corrosion resistance and method for the production thereof », déposée en 2008 par Erbslöh AG.

En réalité, peu de travaux portent sur l'influence métallurgique du substrat bien que des différences aient été observées, comme précité, entre les alliages des séries AA5xxx et AA6xxx. Les alliages utilisés à ce jour en Europe sont généralement issus de bases très pures (Al99.9Mg ou Al99.7Mg et Al99.9MgSi) tels que les alliages des types AA5657 voire AA5505 ou AA5210 pour les tôles de la série AA5xxx et du type AA6401 pour les profilés de la série AA6xxx.

Le produit laminé ou tôle est livré généralement à l'état recuit, connu sous la désignation « H2x », afin de lui garantir un minimum de résistance mécanique mais toutefois une formabilité suffisante pour l'étape de formage, suivie des étapes de brillantage et anodisation.

Le produit filé est généralement livré à l'état métallurgique T4 (mis en solution et trempé) ou T6 (mis en solution, trempé et revenu) dans une forme proche de celle du produit final.

### Problème posé

L'invention vise à obtenir un produit laminé de la série AA5xxx qui, élaboré et transformé sous certaines conditions, permette d'atteindre une performance similaire à celle d'un produit filé/extrudé de la série AA6xxx, en terme de conservation de sa brillance au contact d'une solution fortement alcaline, soit à des valeurs de pH de 11 à 14, tout en maintenant une résistance mécanique satisfaisante et une formabilité suffisante de la tôle ou bande utilisée pour élaborer le produit final.

### Objet de l'invention

L'invention a pour objet un procédé de fabrication d'un jonc enjoliveur extérieur de véhicule automobile, tel que notamment entourage de vitre ou baguette de caisse, en alliage d'aluminium, par mise en forme et brillantage d'une tôle ou bande élaborée selon la revendication 1, notamment en raison des étapes successives suivantes : Coulée continue verticale d'une plaque en alliage de la série AA5xxx de haute pureté, c'est-à-dire de composition telle que (% en poids) : Mg ≤ 1.1, Cu ≤ 0.10, autres éléments ≤ 0.30, reste aluminium.

Réchauffage de la plaque à une température de 480 à 530°C pendant au moins 1 h, laminage à chaud, typiquement jusqu'à une épaisseur de 5 à 30 mm et refroidissement suivi du laminage à froid incluant un recuit intermédiaire en four continu à passage, soit un maintien entre la température de solvus et la température de brûlure de l'alliage pendant typiquement 3 s à 5 min. suivi d'une trempe à l'air ou à l'eau avant laminage à froid final avec un taux de réduction de 15 à 70 % jusqu'à une épaisseur de 0.4 à 1.5 mm.

Afin de faciliter la mise en forme ultérieure de la tôle ou bande, un recuit à une température de 100 à 200°C pendant un temps équivalent à 3 à 15 h à 170°C peut être pratiqué.

Selon un mode de réalisation préférentielle, la composition de la plaque est du type AA5657, soit (% en poids) : Si : ≤ 0.08, Fe : ≤ 0.10, Cu : ≤ 0.10, Mn : ≤ 0.03, Mg : 0.6 - 1.0, Zn : ≤ 0.05, Ti : ≤ 0.020, autres éléments < 0.05 chacun, et < 0.15 au total, reste aluminium.

Dans une autre variante de l'invention, la composition de plaque est du type AA5205, soit (% en poids) : Si : ≤ 0.15, Fe : ≤ 0.7, Cu : 0.03 - 0.10, Mn : ≤ 0.10, Mg : 0.6 - 1.0, Zn : ≤ 0.05, Ti : ≤ 0.05, autres éléments < 0.05 chacun, et < 0.15 au total, reste aluminium.

Selon un autre mode de réalisation, la plaque est en alliage de la série AA5xxx de haute pureté, de composition telle que (% en poids) : Mg ≤ 1.1, autres éléments ≤ 0.10, reste aluminium.

Selon ce mode de réalisation, la composition de la plaque peut être du type AA5505, soit (% en poids) : Si : ≤ 0.06, Fe : ≤ 0.04, Cu ≤ 0.01, Mn : ≤ 0.03, Mg : 0.8 - 1.1, Zn : ≤ 0.03, Ti : ≤ 0.010, autres éléments < 0.05 chacun, et < 0.10 au total, reste aluminium.

Toujours selon ce mode de réalisation, la composition de la plaque peut également être du type AA5210, soit (% en poids) : Si : ≤ 0.06, Fe : ≤ 0.04, Cu : ≤ 0.01, Mn : ≤ 0.03, Mg : 0.35 - 0.60, Zn : ≤ 0.03, Ti : ≤ 0.020, autres éléments < 0.05 chacun, et < 0.10 au total, reste aluminium.

La durée du recuit intermédiaire, c'est-à-dire du maintien entre la température de solvus et la température de brûlure de l'alliage, est préférentiellement comprise entre 5 s et 2 min, et selon un mode avantageux, la température du recuit intermédiaire est comprise entre 450 et 550°C.

L'invention englobe également un jonc enjoliveur fabriqué par un procédé tel que ci-dessus et choisi dans le groupe comprenant les entourages de vitres, baguettes latérales de caisse ou baguettes enjoliveurs de hayon, enjoliveurs de calandre et joncs de pare-choc.

Elle a également pour objet un jonc d'enjoliveur fabriqué par un procédé selon l'un ou plusieurs des modes précités, caractérisé en ce que :

après brillantage de la tôle ou bande comportant les étapes de dégraissage conventionnel, électro-brillantage en milieu acide phospho-sulfurique, typiquement à 75°C sous courant continu à une tension de 25V, rinçage, décapage alcalin typiquement à 50°C, décrassage à l'ambiante, rinçage, anodisation en milieu acide sulfurique sous courant continu, typiquement à 21°C, colmatage des pores en deux étapes, à froid au nickel puis en eau chaude (c'est à dire pré-colmatage dans une solution d'acétate de nickel à l'ambiante puis boehmitage dans l'eau à ébullition), suivi d'un test connu de l'homme du métier sous le nom de « car wash test », soit : décapage acide de 10 min. dans une solution à pH de 1, soit une solution aqueuse contenant 0.1 mole de HCl/litre, rinçage, séchage par maintien de 1h à 40°C, maintien en immersion de 10 min. dans une solution alcaline à un pH de 11 à 14, typiquement telle que celle décrite précédemment, rinçage, séchage et essuyage au tissu à polir, aucune perte de brillance n'est visuellement constatée.

Selon une autre caractéristique avantageuse, le jonc d'enjoliveur fabriqué par un procédé selon l'un ou plusieurs des modes précités est caractérisé en ce que :

après brillantage de la tôle ou bande comportant les étapes de dégraissage conventionnel, électro-brillantage en milieu acide phospho-sulfurique, typiquement à 75°C sous courant continu à une tension de 25V, rinçage, décapage alcalin typiquement à 50°C, décrassage à l'ambiante, rinçage, anodisation en milieu acide sulfurique sous courant continu, typiquement à 21°C, colmatage des pores en deux étapes, à froid au nickel puis en eau chaude, suivi d'un test connu de l'homme du métier sous le nom de « car wash test », soit : décapage acide de 10 min. dans une solution à pH de 1, rinçage, séchage par maintien de 1h à 40°C, maintien en immersion de 10 min. dans une solution alcaline à un pH de 11 à 14, rinçage, séchage et essuyage au tissu à polir, la perte de poids mesurée sur des éprouvettes découpées dans ladite tôle ou bande n'excède pas 40 mg/dm$^2$ de surface immergée.

## Description des figures

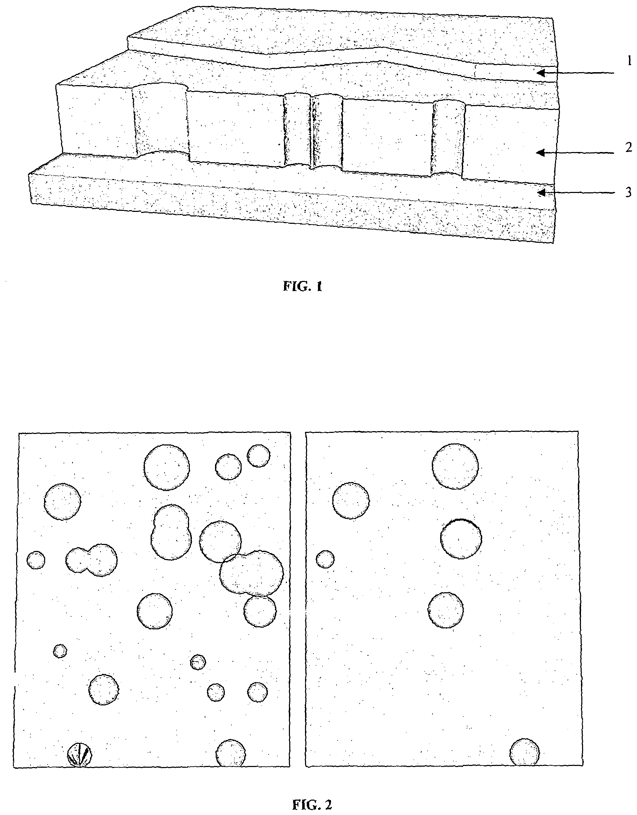

La figure 1 est un schéma représentatif d'une observation en coupe de la couche anodique d'un échantillon d'aluminium après immersion de 10 min. dans une solution alcaline à un pH de 11 à 14, telle que précédemment décrite. La couche anodique (1+2) a une épaisseur standard de 5 à 6 $\mu$m. Environ 1$\mu$m (1) est attaqué par dissolution chimique après le test de 10 min. Le reste de la couche anodique (2) présente des canaux d'attaque dans toute l'épaisseur de la couche et on observe parfois une attaque du métal (3) sous-jacent. La taille des canaux est de l'ordre d'une centaine de nm.

La figure 2 est un schéma représentatif de la surface de l'échantillon observé au microscope électronique à balayage après attaque alcaline de 10 min. pour les échantillons 5505 H22 à gauche et 6401 T6 à droite. Le schéma représente une surface d'observation identique pour les deux échantillons. La densité de défauts peut donc être comparée directement. Il est clair à partir de ce schéma qu'un mauvais comportement au test alcalin conduit à une densité de défauts plus élevée comme illustré pour l'échantillon 5505 H22 par rapport à l'échantillon 6401 T6.

## Description de l'invention

L'invention consiste dans un choix judicieux d'alliage et de traitement thermique, ainsi que de gamme de transformation, de la tôle ou bande utilisée pour la fabrication de baguettes ou joncs enjoliveurs d'extérieur de véhicules automobiles soumis à un environnement corrosif sévère tel que notamment celui des produits détergents des laveries automatiques, constitués de solutions très alcalines, à un pH de 11 à 14, quoiqu'il en soit au-delà du pH de stabilité de la couche anodique, qui permette la conservation de sa brillance tout au long de la vie du véhicule, tout en maintenant une résistance mécanique satisfaisante et une formabilité suffisante.

Elle repose sur la constatation faite par la demanderesse qu'au contact d'une solution fortement alcaline, soit à une valeur de pH de 11 à 14, telle que celle couramment utilisée par les constructeurs automobiles au cours de leurs tests de qualification, l'attaque de la couche anodique se déroule selon deux modes distincts. Ceci apparaît clairement sur la figure 1, vue au microscope électronique à balayage d'une coupe de la couche anodique, d'une épaisseur de 5 à 6 $\mu$m, après immersion pendant dix minutes dans une telle solution alcaline:

Le premier mode (1) correspond à une dissolution chimique relativement lente et uniforme du film d'oxyde colmaté, alors que le deuxième (2) correspond à une attaque rapide et localisée de la couche anodique puis du métal sous-jacent et se traduit par la formation de tunnels étroits traversant la couche d'oxyde.

La demanderesse a également remarqué que l'attaque homogène de la couche d'oxyde selon le premier mode était relativement indépendante du type d'alliage et de son état métallurgique; au contraire, le degré d'attaque localisée à travers la couche d'oxyde dépend grandement de l'alliage et de son état métallurgique.

Ce dernier a un effet prononcé dans le cas des différents alliages de la série AA5xxx testés, alors que cet effet n'apparait pas comme significatif dans le cas des alliages de la série AA6xxx.

Cette différence de comportement est attribuée à une densité d'attaque localisée nettement plus faible dans les cas favorables par rapport à celle des cas défavorables. Elle est illustrée par la figure 2 qui présente des images obtenues en microscopie électronique à balayage et au même grandissement, pour deux échantillons, après immersion pendant dix minutes dans la solution alcaline à un pH de 11 à 14 :
L'image de gauche correspond à un alliage du type AA5505 après laminage à froid et recuit final à une température de 250°C pendant 1 h (état H22) conduisant à un comportement défavorable, alors que l'image de droite correspond à un alliage du type AA6401 extrudé à l'état T6 (trempé et revenu) conduisant à un comportement favorable.

A ce jour, aucune solution industrielle n'est connue pour améliorer le comportement des tôles en alliages de la série AA5xxx par rapport aux profilés en alliages de la série AA6xxx.

La demanderesse ayant constaté cette différence de comportement entre les alliages des séries 6xxx et 5xxx lors des tests de qualification connus sous le nom de « car wash test », et notamment celui décrit dans les exemples, et du fait des observations précitées, l'a considérée non pas comme un comportement intrinsèque au type d'alliage, mais comme lié au mode d'élaboration du produit.

Plus précisément, le comportement défavorable des alliages de la série AA5xxx a été attribué à la précipitation de la phase $Mg_2Si$ pendant le traitement thermique final de recuit. La demanderesse a de ce fait recherché la solution au problème posé dans un mode d'élaboration mieux approprié qui prenne en compte l'influence de la précipitation de fines particules de la phase $Mg_2Si$ durant le traitement thermique final de recuit, mais aussi lors de tout recuit intermédiaire, notamment en cours de laminage à froid.

Il s'est avéré que la solution résidait dans un recuit intermédiaire, en cours de laminage à froid, du type « flash » soit en four continu à passage, à une température comprise entre la température de solvus et la température de brûlure de l'alliage, pendant typiquement 3 secondes à 5 minutes, suivi d'une trempe à l'air ou à l'eau, avant l'étape finale du laminage à froid, au cours de laquelle la résistance mécanique est améliorée par corroyage.

Un recuit complémentaire modéré, c'est à dire à une température de 100 à 200°C pendant un temps équivalent à 3 à 15 h à 170°C, peut être pratiqué afin de faciliter, si nécessaire, la mise en forme ultérieure de la tôle ou bande.

Le temps équivalent *t(eq)* est défini par la formule:

$$t(eq) = \frac{tref * \exp(-15692/Tref)}{\exp(-15692/T_{eq})}$$

où *T* (en K) est la température et *t* la durée du recuit, $T_{ref}$ étant une température de référence de 443K, soit 170°C et *tref* étant le temps de référence précité compris entre 3h et 15h.

Les alliages selon l'invention sont des alliages dits de haute pureté de la série AA5xxx, tels que ceux utilisés pour l'élaboration de tôles brillantes (dites de « grand brillant »), et obtenus à partir de bases très pures (Al99.9Mg ou Al99.7Mg), soit des alliages de la série AA5xxx de composition chimique, exprimée en pourcentages pondéraux (% en poids) telle que: Mg ≤ 1.1, Cu ≤ 0.10, autres éléments ≤ 0.30, le reste étant de l'aluminium, ou, encore plus purs, de composition chimique telle que: Mg ≤ 1.1, autres éléments ≤ 0.10, reste aluminium.

Dans le premier cas, on citera l'alliage du type AA5657, de composition chimique, exprimée en pourcentages pondéraux (% en poids) : Si : ≤ 0.08, Fe : ≤ 0.10, Cu : ≤ 0.10, Mn : ≤ 0.03, Mg : 0.6 - 1.0, Zn : ≤ 0.05, Ti : ≤ 0.020, autres éléments < 0.05 chacun, et < 0.15 au total, reste aluminium, ou encore l'alliage du type AA5205, de composition chimique, exprimée en pourcentages pondéraux (% en poids) : Si : ≤ 0.15, Fe : ≤ 0.7, Cu : 0.03 - 0.10, Mn : ≤ 0.10, Mg : 0.6 - 1.0, Zn : ≤ 0.05, Ti : ≤ 0.05, autres éléments < 0.05 chacun, et < 0.15 au total, reste aluminium.

Dans le second cas on citera notamment les alliages AA5505, de composition (% en poids) : Si : ≤ 0.06, Fe : ≤ 0.04, Cu ≤ 0.01, Mn : ≤ 0.03, Mg : 0.8 - 1.1, Zn : ≤ 0.03, Ti : ≤ 0.010, autres éléments < 0.05 chacun, et < 0.10 au total, reste aluminium, ou encore du type AA5210, soit de composition chimique (% en poids) : Si : ≤ 0.06, Fe : ≤ 0.04, Cu : ≤ 0.01, Mn : ≤ 0.03, Mg : 0.35 - 0.60, Zn : ≤ 0.03, Ti : ≤ 0.020, autres éléments < 0.05 chacun, et < 0.10 au total, reste aluminium.

La fabrication des tôles selon l'invention comporte principalement la coulée, typiquement continue verticale (CCV), des plaques et leur scalpage.

Les plaques scalpées subissent ensuite un réchauffage de plus d'une heure à une température de 480 à 530°C puis le laminage à chaud typiquement jusqu'à une épaisseur de 5 à 30 mm avant refroidissement.

Elles subissent ensuite le laminage à froid tel que précité et au cours duquel le produit subit le recuit intermédiaire à une température comprise entre la température de solvus et celle de brûlure de l'alliage, soit typiquement entre 450 et 550°C.

Après ce recuit, le laminage à froid est repris avec un taux de réduction de 15 à 70 % jusqu'à une épaisseur finale de 0.4 à 1.5 mm.

Enfin, les tôles ou bandes obtenues sont soumises, si nécessaire, au recuit final précité.

Dans ses détails, l'invention sera mieux comprise à l'aide des exemples ci-après, qui n'ont toutefois pas de caractère limitatif.

## Exemples

### Exemple 1

On a coulé par coulée continue verticale une plaque en alliage du type AA5657 de composition (% en poids) : Si : 0.06, Fe : 0.06, Cu : 0.04, Mg : 0.76, Mn : $\leq$ 0.03, Zn : $\leq$ 0.05, Ti : $\leq$ 0.020, autres éléments < 0.05 chacun, et < 0.15 au total, reste aluminium.

La plaque a été réchauffée pendant 1h à une température de 490°C puis laminée à chaud à une épaisseur de 7.5 mm et refroidie avant laminage à froid sans recuit intermédiaire jusqu'à une épaisseur de 0.7 mm.

Enfin, la tôle obtenue a été soumise à un recuit final pendant 1h à une température de 260°C.

Deux échantillons de la bobine (A et B au tableau 1 récapitulatif en fin du paragraphe « Exemples ») ont été prélevés pour subir le traitement de brillantage et d'anodisation suivi du test de qualification du type « car-wash test » tous deux tels que précités.

Les valeurs de perte de poids durant le test, exprimées en mg/dm$^2$ de surface immergée, pour un temps d'immersion de 10 min. sont données au tableau 1 ci-après. Les deux échantillons A et B conduisent à un résultat similaire, soit des valeurs de 54 et 58 mg/dm$^2$.

Pour évaluer l'idée qui sous-tend l'invention, à savoir que le comportement défavorable des alliages de la série AA5xxx était attribuable à la précipitation de la phase Mg$_2$Si pendant le traitement thermique final de recuit, un traitement thermique (noté « Simulation » au tableau 1) a été réalisé en laboratoire, sur un échantillon C de 0.7 mm d'épaisseur à l'état recuit final, pour remettre en solution toute particule Mg$_2$Si qui a précipité pendant la gamme de transformation, par une mise en solution conventionnelle.

Il a été pris pour hypothèse dans cet exemple (et ce sera validé par les exemples suivants) que l'écrouissage à froid et le recuit final selon l'invention ne conduisaient pas à la précipitation de Mg$_2$Si.

L'échantillon C ainsi traité a subi le cycle complet de brillantage/anodisation et le test alcalin du type « car-wash test » tous deux tels que précités.

La valeur de perte de poids après un temps d'immersion de 10 min. est de 24 mg/dm$^2$, soit conforme à la caractéristique revendiquée.

Les échantillons A, B, hors invention, et C simulant l'invention, ont également été évalués visuellement et aucune perte de brillance n'a été constatée sur l'échantillon C contrairement aux 2 échantillons A et B.

Cet exemple valide l'effet positif du recuit intermédiaire selon l'invention.

### Exemple 2

On a coulé par coulée continue verticale une plaque en alliage du type AA5657 de composition identique à celle de l'exemple 1.

La plaque a également été réchauffée pendant 1h à une température de 490°C puis laminée à chaud à une épaisseur de 6.5 mm et refroidie avant laminage à froid jusqu'à une épaisseur de 1.09 mm.

La bobine a ensuite subi un recuit intermédiaire en four à charge pendant 8 h à une température de 360°C.

Le laminage à froid a ensuite été repris jusqu'à l'épaisseur finale de 0.42 mm.

Enfin, la bobine obtenue a été soumise à un recuit final pendant 2.5 h à une température de 170°C.

Il s'agit là d'une gamme avec recuit intermédiaire hors invention.

Un échantillon (D au tableau 1) a alors été prélevé pour subir le traitement de brillantage et d'anodisation suivi du test de qualification « car-wash test » toujours tels que précités. La valeur de perte de poids après un temps d'immersion de 10 min. est de 75 mg/dm$^2$ soit bien au-delà de la valeur de 40 mg/dm$^2$ revendiquée.

L'échantillon D a également été évalué visuellement et présente une perte de brillance significative après le test.

### Exemple 3

On a coulé par coulée continue verticale une plaque en alliage du type AA5505 de composition (% en poids) : Si : 0.03, Fe : 0.03, Cu : $\leq$ 0.01, Mg : 0.88, Mn : $\leq$ 0.03, Zn : $\leq$ 0.03, Ti : $\leq$ 0.010, autres éléments < 0.05 chacun, et < 0.10 au total, reste aluminium.

La plaque a également été réchauffée pendant 1h à une température de 490°C puis laminée à chaud à une épaisseur de 7.5 mm et refroidie avant laminage à froid jusqu'à une épaisseur de 2.3 mm.

La bobine a ensuite subi, selon l'invention, un recuit intermédiaire en four à passage à une température de 500°C, avec un temps de maintien de 23 s au dessus de la température de solvus de l'alliage, suivi d'une trempe à l'air.

Le laminage à froid a ensuite été repris pour conduire à l'épaisseur finale de 1.6 mm. Une autre bobine, du même alliage et transformée de façon identique, mais sans recuit intermédiaire, a également été produite. Celle-ci a subi un recuit final à une température de 250°C pendant 1h.

Des échantillons (F et G pour la première et E pour la seconde) ont été prélevés dans chaque bobine, pour subir le traitement de brillantage et d'anodisation suivi du test de qualification « car-wash test », toujours tels que précités.

Les valeurs de perte de poids après un temps d'immersion de 10 min. sont présentées au tableau 1 ci-après.

Ces résultats démontrent le meilleur comportement du métal produit avec recuit intermédiaire selon l'invention, ici sans recuit final, (F à 30 et G à 29 mg/dm$^2$), par rapport à celui, hors invention, produit sans recuit intermédiaire (E à 58 mg/dm$^2$).

Les échantillons F, G, avec recuit intermédiaire et selon l'invention, ici sans recuit final, et E hors invention produit sans recuit intermédiaire, ont également été évalués visuellement et aucune perte de brillance n'a été constatée sur les échantillons F et G, contrairement à l'échantillon E qui présente une perte de brillance significative.

### Exemple 4

On a coulé par coulée continue verticale une plaque en alliage du type AA5505 de composition identique à celle de l'exemple 3.

La plaque a également été réchauffée pendant 1h à une température de 490°C puis laminée à chaud à une épaisseur de 7.5 mm et refroidie avant laminage à froid jusqu'à une épaisseur de 1.73 mm.

La bobine a ensuite subi, selon l'invention, un recuit intermédiaire en four à passage à une température de 520°C, avec un temps de maintien de 1 min. au dessus de la température de solvus de l'alliage, suivi d'une trempe à l'eau.

Le laminage à froid a ensuite été repris pour conduire à l'épaisseur finale de 1.2 mm. Enfin, la bobine obtenue a été soumise à un recuit final pendant 3 h à une température de 170°C.

Des échantillons ont été prélevés avant (H) et après (I) recuit final, pour subir le traitement de brillantage et d'anodisation suivi du test de qualification « car-wash test », toujours tels que précités.

Les valeurs de perte de poids après un temps d'immersion de 10 min sont similaires, de 26 et 27 mg/dm$^2$.

Les échantillons H et I, selon l'invention, ont également été évalués visuellement et aucune perte de brillance n'a été constatée à l'issue du test.

**Tableau 1**

| Exemple | Echantillon | Alliage | Recuit intermédiaire | Recuit final | Perte pds. (mg/dm$^2$) |
|---------|-------------|---------|----------------------|--------------|------------------------|
| 1 | A | AA5657 | Non | 1 h - 260°C | 58 |
| 1 | B | AA5657 | Non | 1 h - 260°C | 54 |
| 1 | C | AA5657 | **Non** | **Simulation** | **24** |
| 2 | D | AA5657 | 8 h - 360°C | 2.5 h - 170°C | 75 |
| 3 | E | AA5505 | Non | 1 h - 250°C | 58 |
| 3 | F | AA5505 | **23 s - 500°C** | **Non** | **30** |
| 3 | G | AA5505 | **23 s - 500°C** | **Non** | **29** |
| 4 | H | AA5505 | **1min. - 520°C** | **Non** | **26** |
| 4 | I | AA5505 | **1min. - 520°C** | **3 h - 170°C** | **27** |

### Revendications

**1.** Procédé de fabrication d'un jonc enjoliveur extérieur de véhicule automobile, tel que notamment entourage de vitre ou baguette de caisse, en alliage d'aluminium, par mise en forme et brillantage comportant les étapes de dégraissage conventionnel, électro-brillantage en milieu acide phospho-sulfurique, rinçage, décapage alcalin, décrassage à l'ambiante, rinçage, anodisation en milieu acide sulfurique sous courant continu, colmatage des pores en deux étapes, à froid au nickel puis en eau chaude, d'une tôle ou bande élaborée selon les étapes successives suivantes :

a) Coulée continue verticale d'une plaque en alliage de la série AA5xxx de haute pureté, c'est-à-dire de composition telle que (% en poids) :

Mg ≤ 1.1, Cu ≤ 0.10, autres éléments ≤ 0.30, reste aluminium

du type AA5657, soit (% en poids) :

Si : ≤ 0.08, Fe : ≤ 0.10, Cu : ≤ 0.10, Mn : ≤ 0.03, Mg : 0.6 - 1.0, Zn : ≤ 0.05, Ti : ≤ 0.020, autres éléments < 0.05 chacun, et < 0.15 au total, reste aluminium ou

du type AA5205, soit (% en poids) :

Si : ≤ 0.15, Fe : ≤ 0.7, Cu : 0.03 - 0.10, Mn : ≤ 0.10, Mg : 0.6 - 1.0, Zn : ≤ 0.05, Ti : ≤ 0.05, autres éléments < 0.05 chacun, et < 0.15 au total, reste aluminium ou

du type AA5505, soit (% en poids) :

Si : ≤ 0.06, Fe : ≤ 0.04, Cu ≤ 0.01, Mn : ≤ 0.03, Mg : 0.8 - 1.1, Zn : ≤ 0.03, Ti : ≤ 0.010, autres éléments < 0.05 chacun, et < 0.10 au total, reste aluminium ou

du type AA5210, soit (% en poids) :

Si : ≤ 0.06, Fe : ≤ 0.04, Cu : ≤ 0.01, Mn : ≤ 0.03, Mg : 0.35 - 0.60, Zn : ≤ 0.03, Ti : ≤ 0.020, autres éléments < 0.05 chacun, et < 0.10 au total, reste aluminium,

b) Réchauffage de la plaque à une température de 480 à 530°C pendant au moins 1h,
c) Laminage à chaud et refroidissement,
d) Laminage à froid incluant un recuit intermédiaire en four continu à passage, soit un maintien entre la température de solvus et la température de brûlure de l'alliage pendant typiquement 3 s à 5 min. suivi d'une trempe à l'air ou à l'eau.

2. Procédé selon la revendication 1 **caractérisé en ce qu'**il comporte, à l'issue de l'étape d) et avant mise en forme, un recuit final à une température de 100 à 200°C pendant un temps équivalent à 3 à 15 h à 170°C.

3. Procédé selon l'une des revendications 1 à 2 **caractérisé en ce que** la durée du maintien lors du recuit intermédiaire est comprise entre 5 s et 2 min.

4. Procédé selon l'une des revendications 1 à 3 **caractérisé en ce que** la température du recuit intermédiaire est comprise entre 450 et 550°C.

5. Jonc enjoliveur élaboré par un procédé selon l'une des revendications 1 à 4, **caractérisé en ce qu'**il est choisi dans le groupe comprenant les entourages de vitres, baguettes latérales de caisse ou baguettes enjoliveurs de hayon, enjoliveurs de calandre et joncs de pare-choc.

6. Jonc enjoliveur selon la revendication 5, **caractérisé en ce que** :

après un test connu de l'homme du métier sous le nom de « car wash test », soit : décapage acide de 10 min. dans une solution à pH de 1, rinçage, séchage par maintien de 1h à 40°C, maintien en immersion de 10 min. dans une solution alcaline à un pH de 11 à 14, rinçage, séchage et essuyage au tissu à polir,
aucune perte de brillance n'est visuellement constatée.

7. Jonc enjoliveur selon la revendication 5, **caractérisé en ce que** :

après un test connu de l'homme du métier sous le nom de « car wash test », soit : décapage acide de 10 min. dans une solution à pH de 1, rinçage, séchage par maintien de 1h à 40°C, maintien en immersion de 10 min. dans une solution alcaline à un pH de 11 à 14, rinçage, séchage et essuyage au tissu à polir,
la perte de poids mesurée sur des éprouvettes découpées dans ladite tôle ou bande n'excède pas 40 mg/dm$^2$ de surface immergée.

**Patentansprüche**

1. Verfahren zur Herstellung eines äußeren Zierstabs für Kraftfahrzeuge, insbesondere Fensterumrandung oder Karosserieleiste, aus Aluminiumlegierung durch Formen sowie Glanzpolieren mit den Schritten herkömmliches Entfetten, Elektropolieren in saurer Phosphor-Schwefel-Lösung, Spülen, alkalisches Beizen, Reinigen bei Raumtemperatur, Spülen, Anodisieren in Schwefelsäurelösung unter Gleichstrom, Verdichten der Poren in zwei Schritten, kalt mit Nickel und in heißem Wasser, eines nach folgenden aufeinanderfolgenden Schritten hergestellten Bleches oder Bandes:

   a) Vertikales Stranggießen einer Platte aus einer hochreinen Legierung der Serie AA5xxx, d. h. deren Zusammensetzung (in Gew.-%) so gewählt ist, dass:

   $Mg \leq 1.1$, $Cu \leq 0.10$, weitere Elemente $\leq 0.30$, Rest Aluminium,

   vom Typ AA5657, d. h. (in Gew.-%):

   Si: $\leq$ < 0.08, Fe: $\leq$ 0.10, Cu: $\leq$ 0.10, Mn: $\leq$ 0.03, Mg: 0.6 - 1.0, Zn: $\leq$ 0.05, Ti: $\leq$ 0.020, weitere Elemente jeweils < 0.05 und insgesamt < 0.15, Rest Aluminium, oder

   vom Typ AA5205, d. h. (in Gew.-%):

   Si $\leq$ 0.15, Fe: $\leq$ 0.7, Cu: 0.03 - 0.10, Mn: $\leq$ 0.10, Mg: 0.6 - 1.0, Zn: $\leq$ 0.05, Ti: $\leq$ 0.05, weitere Elemente jeweils < 0.05 und insgesamt < 0.15, Rest Aluminium, oder

   vom Typ AA5505, d. h. (in Gew.-%):

   Si $\leq$ 0.06, Fe $\leq$ 0.04, Cu $\leq$ 0.01, Mn: $\leq$ 0.03, Mg: 0.8 - 1.1, Zn: $\leq$ 0.03, Ti: $\leq$ 0.010, weitere Elemente jeweils < 0.05 und insgesamt < 0.10, Rest Aluminium, oder

   vom Typ AA5210, d. h. (in Gew.-%):

   Si $\leq$ 0.06, Fe: $\leq$ 0.04, Cu: $\leq$ 0.01, Mn: $\leq$ 0.03, Mg: 0.35 - 0.60, Zn: $\leq$ 0.03, Ti: $\leq$ 0.020, weitere Elemente jeweils < 0,05 und insgesamt < 0,10, Rest Aluminium,

   b) Erhitzen der Platte auf eine Temperatur von 480 bis 530°C für mindestens 1 Stunde,
   c) Warmwalzen und Kühlen,
   d) Kaltwalzen einschließlich Zwischenglühen im Durchlaufofen, d. h. Halten zwischen der Solvustemperatur und der Brenntemperatur der Legierung für typischerweise 3 Sekunden bis 5 Minuten, und anschließendes Luft- oder Wasserabschrecken.

2. Verfahren nach Anspruch 1, **dadurch gekennzeichnet, dass** es nach dem Schritt d) und vor dem Formen ein Fertigglühen bei einer Temperatur von 100 bis 200°C für eine Zeitdauer von 3 bis 15 Stunden bei 170°C umfasst.

3. Verfahren nach einem der Ansprüche 1 bis 2, **dadurch gekennzeichnet, dass** die Haltezeit beim Zwischenglühen zwischen 5 Sekunden und 2 Minuten liegt.

4. Verfahren nach einem der Ansprüche 1 bis 3, **dadurch gekennzeichnet, dass** die Temperatur beim Zwischenglühen zwischen 450 und 550°C liegt.

5. Zierstab, hergestellt durch ein Verfahren nach einem der Ansprüche 1 bis 4, **dadurch gekennzeichnet, dass** er ausgewählt ist aus der Gruppe bestehend aus Fensterumrandungen, Karosserieseitenleisten oder Heckklappenleisten, Kühlergrillleisten und Stoßfängerstäben.

6. Zierstab hergestellt nach Anspruch 5, **dadurch gekennzeichnet, dass**:

   nach einer dem Fachmann als « Car Wash Test » bekannten Prüfung, d.h. 10 Min. Säurebeizen in einer Lösung mit einem pH-Wert von 1, Spülen, Trocknen durch 1-stündiges Halten bei 40°C, 10 Min. Eintauchen in eine alkalische Lösung mit einem pH-Wert von 11 bis 14, Spülen, Trocknen und Abwischen mit einem Poliertuch, kein Glanzverlust optisch festgestellt wird.

7. Zierstab hergestellt nach Anspruch 5, **dadurch gekennzeichnet, dass**:

nach einer dem Fachmann als « Car Wash Test » bekannten Prüfung, d.h. 10 Min. Säurebeizen in einer Lösung mit einem pH-Wert von 1, Spülen, Trocknen durch 1-stündiges Halten bei 40°C, 10 Min. Eintauchen in eine alkalische Lösung mit einem pH-Wert von 11 bis 14, Spülen, Trocknen und Abwischen mit einem Poliertuch, der an aus dem Blech oder Band ausgeschnittenen Prüfkörpern gemessene Gewichtsverlust 40 mg/dm$^2$ eingetauchter Oberfläche nicht überschreitet.

**Claims**

1. Method for manufacturing a motor vehicle external moulding ring, such as in particular a window surround or body shell moulding, made of aluminium alloy, by forming and brightening including steps for conventional degreasing, electro-brightening in phospho-sulphuric acid medium, ambient surface cleaning, rinsing, continuous current anodisation in sulphuric acid medium, pore sealing in two steps, cold with nickel and in hot water, of a sheet or strip prepared according to the following successive steps:

a) Vertical continuous casting of a high-purity AA5xxx series alloy ingot, i.e. having a composition such that (% by weight):

Mg $\leq$ 1.1, Cu $\leq$ 0.10, other elements $\leq$ 0.30, remainder aluminium

of the AA5657 type, i.e. (% by weight):

Si: $\leq$ 0.08, Fe: $\leq$ 0.10, Cu: $\leq$ 0.10, Mn: $\leq$ 0.03, Mg: 0.6 - 1.0, Zn: $\leq$ 0.05, Ti: $\leq$ 0.020, other elements < 0.05 each, and < 0.15 in total, remainder aluminium or

of the AA5205 type, i.e. (% by weight):

Si: $\leq$ 0.15, Fe: $\leq$ 0.7, Cu: 0.03 - 0.10, Mn: $\leq$ 0.10, Mg: 0.6 - 1.0, Zn: $\leq$ 0.05,
Ti: $\leq$ 0.05, other elements < 0.05 each, and < 0.15 in total, remainder aluminium or

of the AA5505 type, i.e. (% by weight):

Si: $\leq$ 0.06, Fe: $\leq$ 0.04, Cu: $\leq$ 0.01, Mn: $\leq$ 0.03, Mg: 0.8 - 1.1, Zn: $\leq$ 0.03, Ti: $\leq$ 0.010, other elements < 0.05 each, and < 0.10 in total, remainder aluminium or

of the AA5210 type, i.e. (% by weight):

Si: $\leq$ 0.06, Fe: $\leq$ 0.04, Cu: $\leq$ 0.01, Mn: $\leq$ 0.03, Mg: 0.35 - 0.60, Zn: $\leq$ 0.03,
Ti: $\leq$ 0.020, other elements < 0.05 each, and < 0.10 in total, remainder aluminium,

b) Reheating of the ingot at a temperature of 480 to 530°C for at least 1 hour,
c) Hot rolling and cooling,
d) Cold rolling including intermediate annealing in a continuous passage furnace, i.e. holding between the solvus temperature and the burning temperature of the alloy for typically 3 s to 5 min followed by air or water quenching.

2. Method according to claim 1 **characterised in that** it comprises, following step d) and prior to forming, a final annealing at a temperature from 100 to 200°C for a time equivalent to 3 to 15 hours at 170°C.

3. Method according to one of claims 1 to 2 **characterised in that** the hold time during intermediate annealing is between 5 s and 2 min.

4. Method according to one of claims 1 to 3 **characterised in that** the intermediate annealing temperature is between 450 and 550°C.

5. Moulding ring prepared by means of a method according to one of claims 1 to 4, **characterised in that** it is chosen in the group comprising window surrounds, body shell side mouldings or tailgate trim mouldings, grille trims and bumper mouldings.

6. Moulding ring according to claim 5, **characterised in that**:

after a test known to those skilled in the art as a "car wash test", i.e.: acid pickling for 10 min in a solution at pH 1, rinsing, drying by holding for 1 hour at 40°C, holding immersion for 10 min in an alkaline solution at pH 11 to 14, rinsing, drying and buffing,
no loss of brightness is visually observed.

7. Moulding ring according to claim 5, **characterised in that**:

after a test known to those skilled in the art as a "car wash test", i.e.: acid pickling for 10 min in a solution at pH 1, rinsing, drying by holding for 1 hour at 40°C, holding immersion for 10 min in an alkaline solution at pH 11 to 14, rinsing, drying and buffing,
the weight loss measured on test specimens cut from said sheet or strip does not exceed 40 mg/dm$^2$ of immersed surface area.

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1873278 A1

- WO 2009068168 A

**Littérature non-brevet citée dans la description**

- **L. E. COHEN ; J. A. HOOK.** Corrosion of anodized aluminium by alkaline cleaners: Causes and cures. *Plat. Surf. Finish,* 1987, vol. 74 (2), 73-76

- Colmatage résistant aux milieux alcalins. **S. JO-LIVET.** Colloque sur le Traitement de Surface des Alliages d'Aluminium. CETIM/CERTEC, 2008
- **R. STEINS et al.** High performance anodized layers. *European Aluminium Congress,* 2009